# EUROPEAN PATENT APPLICATION

(11) **EP 2 612 833 A1**
(43) Date of publication of application: **10.07.2013**
(21) Application number: 12150070.6
(22) Date of filing: 03.01.2012
(51) Int. Cl.: B65H 49/08, B65H 57/18, B23K 9/133

(54) **Container for welding wire with sliding weight-element traversed by the wire**

(71) Applicant: ISAF S.p.A., 38089 Storo (TN) (IT); S.C. Ductil S.A., 120068 Buzau (RO)
(72) Inventor: Stocchetti, Roberto, 38023 Cles (Trento) (IT); Manafu, Eugen, 120260 Buzeau (RO)
(74) Representative: Pittis, Olivier

(57) **Abstract**

A container for packaging a coil (10) of welding wire (11), comprising a hollow body (1) which comprises a peripheral wall (2), a bottom part (4) at the lower end (1b) of the body (1), a cover part (3) at the upper end (1a) of the body (1), a circular coil (10) of welding wire (11) being disposed in said hollow body (1) between the bottom part (4) and the cover part (3). It further comprises a sliding weight-element (7) comprising a traversing passage (8) traversed by the wire (11), said sliding weight-element (7) being positioned and mobile on the wire spool (10), in the vicinity of the internal surface (2a) of the peripheral wall (2), so as to continuously exert a weight pressure on the wire coil (10). Robotic or automatic welding process, wherein a welding wire is melted by an electric arc or a laser beam, **characterized in that** the wire is extracted from a container according to the invention.

## Description

The present invention relates to a container or drum for packaging, storing, transporting and unwinding a coil or spool of welding wire, and the use of such a container in a welding operation, preferably an electric arc welding process, such as MIG or MAG welding process.

Solid and flux cored wires are usually packed in spools or reels of between 200 kg to 1000 kg and stored in wire containers, in particular in drums. They are mainly used in automatic or semi-automatic welding lines, as well as in robotic welding.

One major problem encountered in (semi)automatic or robotic welding is the control of the welding wire as it is withdrawn from the drum.

Indeed, when using a welding wire that comes out of a drum, twists in the wire are created by the spooling process as the wire is withdrawn from the drum.

Actually, when a welding wire is packed in a round drum, i.e. a cylindrical-shape container having a circular cross section, the wire is always twisted when the wire is extracted from the drum by the welding machine which comprises a welding torch to which the wire is fed. These twists are released when the wire leaves the drum.

However, twists are a serious issue since they are often involved in subsequent welding defects or quality of the welding joints thus obtained.

Several solutions have already been proposed for trying to solve these problems.

For instance, EP-A-519424 discloses a container with a retainer device placed on the top of the coil and having an outer periphery matching the diameter of the inner wall of the container and an inner bell-mouthed portion defining a wire extraction opening. The retainer has a smaller size than the internal diameter of the container so that it can freely descend in the container in contact with the coil as the height of the coil decreases as the wire is being unwound from the coil.

EP-A-636098 teaches to use of a square box with an internal flat cover arranged on the wire coil. The cover has a peripheral square border that matches the internal shape of the box so as to retain the welding wire and avoid or limit the twists.

EP-A-1053189 discloses a polygonal box-like body for accommodating a circular coil of wire during the transportation and the unwinding of the coil and a retainer device arranged inside the body on the coil for preventing accidental entanglement of the wire turn during the unwinding of the wire from an upper end of the coil and a wire conduit device for the guiding the wire out from the body during the unwinding.

EP-A-1693139 discloses a drum for a welding wire coil comprising a wire holding device positioned on the coil for holding the spirals in position during the unwinding of the wire. The holding device has a rigid central disc and a flexible cover with a dimension greater than an inner diameter of the drum so that corner portions of the cover slightly rise along an inner wall of the drum.

EP-A-1693140 teaches a drum with a conical, tapered or pyramidal inner wall formed of oblique pieces and comprising a rigid central disc with a central orifice positioned on the coil and across which the wire passes, and further with flexible and deformable peripheral expansions projecting beyond the edge of the disc to maintain the wire loops.

EP-A-1357059 describes a welding wire packaging formed of an internal cylindrical drum and external square box.

However, these solutions are either not totally satisfying as they can not always efficiently stop or minimize the formation of twists in the wire.

In other words, extraction systems of the prior art have some drawbacks among which the main one being an inconstant wire unwinding with shocks leading to variable tensions applied to the wire with wire loop formation and knots involving frequent wire breaks and/or welding process interruptions and/or inconstant and discontinuous welding deposits having bad or insufficient physico-mechanical characteristics or properties.

Further, some of these prior art drums are not always environmentally friendly as some of them are made of or comprise parts made of non-recyclable material, such as plastic or similar products.

Furthermore, some others have a complex architecture and are hence expensive to manufacture.

Moreover, the known extraction systems are usually based on the principle of an unwinding of the wire through the central opening of an internal mobile retainer.

However, the use of such a retainer with central unwinding, one the one hand, confers to the wire undesired geometrical characteristics (i.e. amplitude, flatness, torsion...) having important values because the wire is inevitably bent and deformed when it passes through the central opening of the retainer. On the other hand, additional frictions between the spirals of wire and the retainer and/or the drum wall are also generated. All of this leads to the need of an increased power of the welding machine engine to ensure the wire withdrawal, a fast wear and tear of the liner through which is conveyed the wire after its withdrawal from the container, and other issues such as wire blocking or knots and even wire breaking

The problem is hence to provide a new container or drum for welding wire coil that overcomes or at least minimizes the above mentioned problems of twists and non-uniform unwinding of the wire coil, that has a simple architecture, that is cheap to manufacture, that is further easy to transport and handle, stable during utilization and that is preferably made of recyclable materials, such as cardboard or other recyclable materials.

In other words, the goal of the present invention is to provide a drum or similar container comprising a wire-extraction mechanism that facilitates the extraction of the wire out of the drum and further minimizes or avoids the twist formation due to non-uniform unwinding.

The solution according to the present invention is a container, also called drum, for packaging a coil of welding wire, comprising a hollow body which comprises a peripheral wall, a bottom part at the lower end of the body, a cover part at the upper end of the body, a circular coil of welding wire being disposed in said hollow body between the bottom part and the cover part, **characterized in that** it further comprises a sliding weight-element comprising a traversing passage traversed by the wire, said sliding weight-element being positioned and mobile on the wire spool, in the vicinity of the internal surface of the peripheral wall, so as to continuously exert a weight pressure on the wire coil, in particular when a drawing force is applied to the wire for drawing it out of the container.

Depending on the embodiment, a container according to the container or drum of the present invention can comprise one or several of the following additional features:
- the wire slides through the traversing passage of the sliding weight-element, while said sliding weight-element is moving along the internal surface of the peripheral wall, during unwinding of said wire, i.e. when a drawing force is applied to the wire for drawing it out of the container.
- the sliding weight-element has a spherical, ellipsoidal or oval shape.
- the sliding weight-element is made of a metal, plastic or wood material, or of any suitable material, preferably of plastic or wood material.
- the hollow body of the container has a cylindrical shape.
- the hollow body further comprises an axially mobile retainer arranged on the top of the welding wire coil so as to maintain some of the wire spirals of the coil, during unwinding of said wire.
- the retainer comprises a circular disk, preferably with a central passage.
- the retainer comprises a circular disk with a central passage, arranged on a cylindrical element comprising an axial opening, said central passage facing said axial opening.
- the peripheral wall, the bottom part and/or the cover part are made of cardboard material
- the peripheral wall of body is made of a multi-layer cardboard, preferably reinforced with one or several strips, such as plastic strips.
- the mobile retainer are made of cardboard, plastic or wood.
- the cover comprises a central passage for the wire.
- the internal diameter of the hollow body is of between 30 cm and 120 cm.
- the height of the hollow body of the container is of between 50 and 120 cm, typically of at least 70 cm, preferably of at least 80 cm, more preferably of at least 90 cm.
- the sliding weight-element has a weight of less than 3 kg, preferably less than 2 kg.
- the sliding weight-element has a weight of between about 0,1 and 1 kg, preferably depending on the wire diameter.
- the sliding weight-element has an outer size, such as an outer diameter in the case of a spherical ball, of between about 40 and 100 mm.
- the mobile retainer has a height of between about 4 and 10 cm.
- the mobile retainer has an external diameter (i.e. a periphery) less than the internal diameter of the hollow body so that the wire can pass between the external contour or periphery of the mobile retainer and the internal wall of the hollow body.
- the wire spool has a weight of between 50 and 1000 kg, preferably less than about 800 kg, and more preferably less than about 500 kg.

A container according to the present invention can be used in a robotic or automatic welding operation, preferably an electric arc welding process, such as a MIG/MAG welding processes, or in laser welding operations.

The present invention will be better understood thanks to the following description of an embodiment of a container according to the present invention, which is made in references to the accompanying figures among which:
- Figure 1 and 4 represent a general scheme and an internal view of a container according to the invention,
- Figures 2 represents an embodiment of the retainer of the container of Figure 1;
   and
- Figures 3 represents an embodiment of the sliding weight-element of the container of Figure 1.

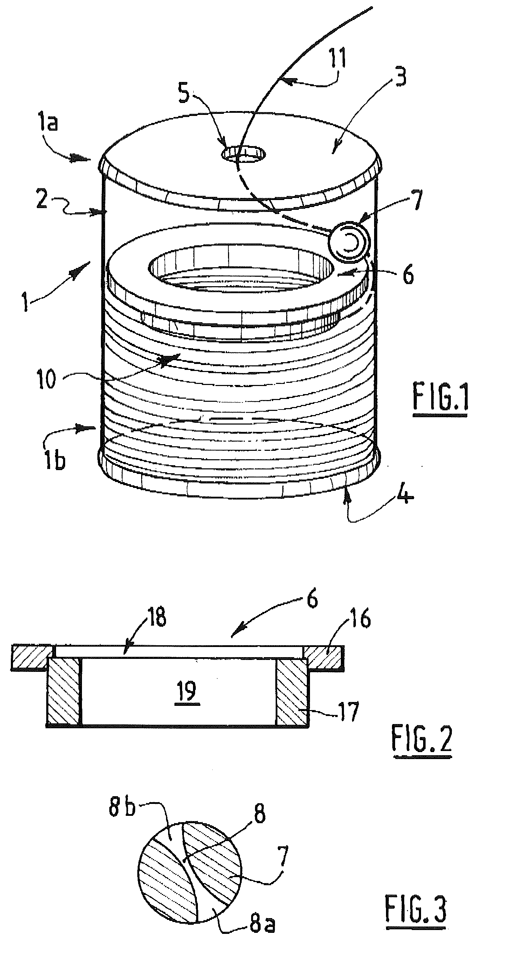

Figure 1 shows an embodiment of a container or drum 1 for packaging a coil or spool 10 of welding wire 11, such as a flux cored wire or a metal cored wire, according to the present invention.

The container 1 comprises a peripheral wall 2 forming a hollow body having a cylindrical shape, a bottom part 4 and a cover part 3.

The bottom part 3 is arranged at its lower end 1b and is integral with the peripheral wall 2.

At its upper end 1a, is arranged a cover part 3 that closes the container 1 during transportation, storage and use. During a welding operation, the wire 11 is extracted from the body 1 through a small outlet or central passage 5, i.e. a hole, arranged at the center of the cover 3 and sized for allowing the wire 11 to pass through it.

The cover 3 is generally arranged on the top of the container 1 in a removable way so that an operator can remove it and have access to the wire spool 10 positioned in the container 1.

The peripheral body or wall 2 is preferably made of cardboard, such as reinforced cardboard, i.e. several cardboard layers reinforced with plastic strips. The bottom part 4 and the cover 3 are preferably made of cardboard.

In the present embodiment, the hollow body 1 has a cylindrical shape. It is preferably made of one rectangular piece of cardboard that is bent so as to obtain the desired circular hollow body 1 and having its two opposite parallel edges attached one to the other, for instance stapled, glued or bonded together so as to obtain a closed cylinder body.

The bottom part 4 is fixed to said cylinder body by any suitable connection means, for instance it can be stapled, glued, bonded or similar.

The internal diameter of the container 1 is typically of between 30 and 120 cm, whereas its height is generally of at least 70 cm and typically of about between 90 and 120 cm.

The container 1 can be arranged on a pallet (not shown) for facilitating its storage and transportation, especially with a fork-lift or similar.

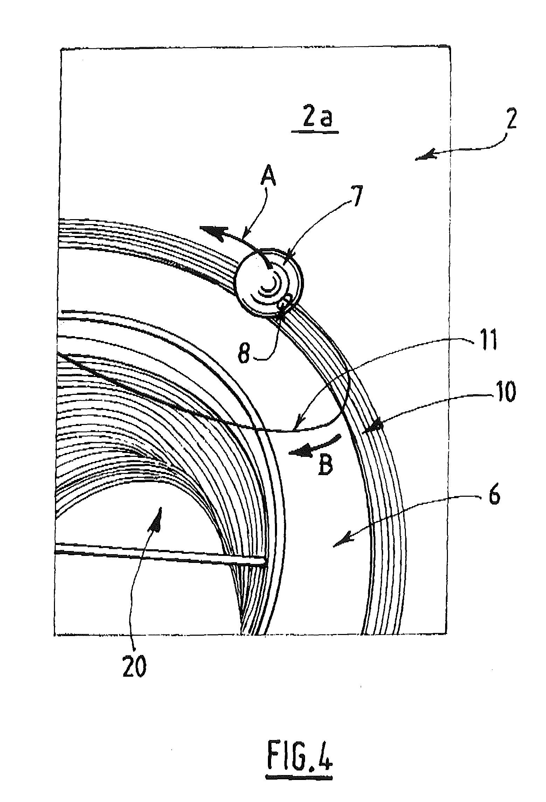

According to the present invention, the container or drum 1 further comprises a sliding weight-element 7 with a traversing passage 8 through which passes the wire 11 as illustrated in Figure 1 and 4.

Said sliding weight-element 7 is normally positioned and mobile on the wire spool 10, in the vicinity of, i.e. close to, the internal surface 2a of the peripheral wall 2 of the container 1, so as to continuously exert a weight pressure on the wire coil 10.

Actually, during unwinding of the wire 11, said wire 11 slides through the traversing passage 8 of the sliding weight-element 7, while said sliding weight-element 7 is moving along the internal surface 2a of the peripheral wall 2 (i.e. in the direction of Arrow A in Fig. 4), during unwinding of the wire 11, i.e. when a extraction force is applied to the wire 11 (i.e. in the direction of Arrow B in Fig. 4).

In other words, during unwinding, the sliding weight-element 7 moves on the coil and all along the peripheral internal wall 2a of the container 1 (Arrow A) while being always kept (due to its weight) in mechanical contact with the top surface of the wire spool 10, while the wire 11 is progressively extracted from the container 1.

Advantageously, the sliding weight-element 7 has a spherical, ellipsoidal or oval shape, preferably a spherical shape as detailed in Figure 3, e.g. a ball-shape with an internal passage 8.

The presence of such a sliding weight-element 7 cooperating with the wire spool 10 solves the drawbacks of the drums of the prior art as it maintains the spirals of the wire 11 in position by means of its weight that exerts a force acting on said wire spirals.

This allows a smooth unwinding of the wire 11 with no twist or knot formation.

The sliding weight-element 7, also called 'ball', can be preferably made of wood or plastic material, such as PVC, polyamide or similar. It can have an outer size, such as an outer diameter in the case of a spherical ball, of between 40 and 100 mm, and a weight of preferably between 0,1 and 1 kg. The weight, size and form of the sliding weight-element 7 can be easily determined and/or fixed by a skilled artisan.

The sliding weight-element 7 comprises a traversing passage 8 forming a channel through which passes the wire 1, which passage 8 has a size, i.e. internal diameter, greater than the external diameter of the wire 11. Preferably, the traversing passage 8 has a size (i.e. diameter) of between 4 and 15 mm, whereas its length corresponds to the size of the sliding weight-element 7.

Preferably, the inlet and outlet orifices 8a, 8b of the passage 8 of the sliding weight-element 7 have size (diameter) wider than the rest of the traversing passage 8 as illustrated in Figure 3 so as not to block the travel of the wire 11 in said traversing passage 8 when the sliding weight-element 7 slides on the wire 11, during unwinding.

Furthermore, a mobile retainer 6 or ring can be arranged on the top of the welding wire coil 10 so as to also maintain some of the wire spirals of the wire 11 as shown in Figures 1 and 4. Said mobile retainer 6 is axially mobile into the container 1. It comprises a circular disk 16 with a central passage 18 as detailed in Figure 2.

Preferably, said circular disk 16 is further is arranged on a cylindrical element 17 comprising an axial opening 19 facing the central passage 18. The circular disk 16 and cylindrical element 17 can be made one-piece or of several pieces rendered integral, e.g. glued or stapled together. The mobile retainer 6 can have a generally toroid shape with an inner diameter in a range of about 34 to 44 cm, an outer diameter in a range of 44 to 60 cm and a height of 5 to 10 cm as shown in Figure 2.

The retainer ring helps to maintain the wire spirals thereby preventing the wire to twist because of torsion phenomenon or similar. In this aim, as shown in Figure 4, the mobile retainer 6 has an external diameter, i.e. a periphery, that is less than the internal diameter of the hollow body 2 so that the wire 10 can pass between the external contour or periphery of the mobile retainer 6 and the surface of the internal wall 2a of the hollow body 2. For example, the diameter of the retainer 6 can be chosen so as to have a free space of several mm or cm between the external periphery of the retainer 6 and the surface of the internal wall 2a of the body 2 thereby allowing the wire to be withdrawn and unwound through said space as visible on Figure 4.

Thanks to the sliding weight-element 7 of the present invention, it is possible to proceed with an unwinding of the wire 11 from its outer diameter, i.e. close to the internal wall 2a, thereby allowing the wire to smoothly unwind and thus allowing a better wire extraction, i.e. more uniform and with a lower power consumption.

Even it is better to use the sliding weight-element 7, e.g. a ball, in combination with a mobile retainer 6, it is possible to use the ball alone or, according to another embodiment, to use it in combination with another device, such as a internal cylinder element positioned into the hollow space at the center 20 of the spool 10

In any cases, one main role of the sliding weight-element 7 is to permanently and continuously separate the spirals of wire which are present on the top of the spool 10 in the vicinity of the peripheral wall 2 of the container 1 thereby prohibiting that said wire spirals go one over the others, during transportation, manipulation, storing and unwinding of the wire spool 10.

Further, another role of the sliding weight-element 7 is to decrease the frictions of the spirals of wire 11 between themselves as well as between them and the container's wall 2.

Due to gravity, i.e. to its weight, the sliding weight-element 7 is in permanent contact with the spirals of wire 11 which are still not unwounded thus preventing them to go one over the other, to knot or break. The unwinding being done between the external periphery of the retainer 6 and the internal surface 2a of the wall 2, the wire 11 Iis always kept away from the drum wall 2, i.e. situated all the time at a distance equal to about half of the sliding weight-element's size (e.g. an half diameter in the case of a spherical ball).

The wire 11 is thus permanently elongated having a constant tension due to the weight of the sliding weight-element 7 enabling a linear loop-free unwinding.

The wire 11 extracted from the container according to the present invention can be used in any robotic or automatic welding process and/or machine, wherein said welding wire has to be melted by an electric arc or a laser beam, preferably an electric arc, such as in a MIG/MAG welding operation.

## Claims

1. Container for packaging a coil (10) of welding wire (11), comprising a hollow body (1) which comprises a peripheral wall (2), a bottom part (4) at the lower end (1b) of the body (1), a cover part (3) at the upper end (1a) of the body (1), a circular coil (10) of welding wire (11) being disposed in said hollow body (1) between the bottom part (4) and the cover part (3), **characterized in that** it further comprises a sliding weight-element (7) comprising a traversing passage (8) traversed by the wire (11), said sliding weight-element (7) being positioned and mobile on the wire spool (10), in the vicinity of the internal surface (2a) of the peripheral wall (2), so as to continuously exert a weight pressure on the wire coil (10).

2. Container according to Claim 1, **characterized in that** the wire (11) slides through the traversing passage (8) of the sliding weight-element (7), while said sliding weight-element (7) is moving along the internal surface (2a) of the peripheral wall (2), during unwinding of said wire (11).

3. Container according to any one of the previous Claims, **characterized in that** the sliding weight-element (7) has a spherical, ellipsoidal or oval shape.

4. Container according to any one of the previous Claims, **characterized in that** the sliding weight-element (7) is made of plastic material or wood.

5. Container according to any one of the previous Claims, **characterized in that** the hollow body (2) of the container (1) has a cylindrical shape.

6. Container according to any one of the previous Claims, **characterized in that** the hollow body (1) further comprises an axially mobile retainer (6) arranged on the top of the welding wire coil (10).

7. Container according to any one of the previous Claims, **characterized in that** the retainer (6) comprises a circular disk (16).

8. Container according to any one of the previous Claims, **characterized in that** the retainer (6) comprises a circular disk (16) with a central passage (18), arranged on a cylindrical element (17) comprising an axial opening (19), said central passage (18) facing said axial opening (19).

9. Container according to any one of the previous Claims, **characterized in that** the peripheral wall (2), the bottom part (4) and/or the cover part (3) are made of cardboard material, preferably the peripheral wall (2) of body (1) is made of a multi-layer cardboard.

10. Container according to any one of the previous Claims, **characterized in that** the mobile retainer (6) are made of cardboard, plastic or wood.

11. Container according to any one of the previous Claims, **characterized in that** the cover (3) comprises a central passage (5) for the wire (11).

12. Container according to any one of the previous Claims, **characterized in that** the sliding weight-element (7) has a weight of between 0,1 and 1 kg.

13. Container according to any one of the previous Claims, **characterized in that** the internal diameter of the hollow body (1) is of between 30 and 120 cm and/or that the height of the hollow body (1) is of between 50 and 120 cm.

14. Robotic or automatic welding process, wherein a welding wire is melted by an electric arc or a laser beam, **characterized in that** the wire is extracted from a container according to any one of the previous Claims.
